# EUROPÄISCHE PATENTANMELDUNG

(11) **EP 0 954 183 A1**
(43) Veröffentlichungstag der Anmeldung: **03.11.1999**
(21) Anmeldenummer: 99108500.2
(22) Anmeldetag: 30.04.1999
(51) Int. Cl.: H04N 9/31

(54) **Bildprojektor zur Projektion von Bilder aus einer Digitalkamera**

(30) Priorität: 30.04.1998 DE 19819545
(71) Anmelder: SIEMENS AKTIENGESELLSCHAFT, 80333 München (DE)
(72) Erfinder: Schittel, Hans-Peter, 83052 Bruckmühl (DE)

(57) **Zusammenfassung**

Die Erfindung betrifft einen Bildprojektor (BP) mit einer Projektionseinrichtung (PE) zur Wiedergabe von Daten, insbesondere Bilddaten, die mit einer Digitalkamera generiert worden sind, mit einer Aufnahmeschnittstelle (AS) zur Aufnahme der Daten aus einem Speicherbaustein der Digitalkamera in einen internen Datenspeicher (DSP), und mit Mitteln (ST, BOF) zur Auswahl der Daten und Weiterleitung an die Projektionseinrichtung (PE).

## Beschreibung

Die Erfindung betrifft einen Bildprojektor zur Wiedergabe von Daten, insbesondere Bilddaten, die mit einer Digitalkamera generiert worden sind.

Solche Digitalkameras als kleine, handliche Fotoapparate, insbesondere mit Zoomobjektiven, sind bekannt. Die mit diesen Kameras fotografierten Bilder können mit einer unterschiedlichen Auflösung in einem digitalen Bildspeicher abgelegt werden. Der bei herkömmlichen Fotoapparaten bekannte Sucher kann durch einen, insbesondere schwenkbaren, LCD-Monitor ersetzt sein. Zur Abspeicherung der Bilder können auch Kompressionsverfahren, insbesondere nach dem JPEG-Verfahren, eingesetzt werden.

Zur Kamera wird eine sogenannte Smart-Media-Karte mitgeliefert, auf der die fotografierten Bilder gespeichert werden können. Die momentane Speicherkapazität dieser Karte beträgt 4 MB. Je nach Bildinhalt und in Abhängigkeit von der Auflösung des Bildwandlers können darauf zwischen 6 und 60 Bilder gespeichert werden. Die Smart-Media-Karte dient als austauschbarer Speicher. An Stelle der Smart-Media-Karte kann auch eine sogenannte MultiMediaCard (MMC) als wechselbare Solid-State-Speicherlösung für mobile Anwendungen in der Digitalkamera vorgesehen sein.

Die im Fotoapparat beziehungsweise auf einer der Speicherkarten gespeicherten Bilder können an einem herkömmlichen Fernsehgerät dargestellt, und auch zu Personalcomputern übertragen und dort bearbeitet werden. Ebenso ist eine Ausgabe der Bilder an einem Drucker möglich, wobei vorzugsweise Farbdrucker verwendet werden. Zur Ausgabe der Bilddaten weist die Digitalkamera eine serielle Schnittstelle auf.

Die Digitalkamera liefert in an sich bekannter Weise Bilder (still video). Es ist denkbar, daß sie auch eine Aufeinanderfolge von Bildern oder eine Serie von 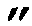 Bewegtbildern" (video) aufnimmt. Sie kann im letzteren Fall, zumindest für eine kurze Zeitspanne, sozusagen filmen.

Der Erfindung liegt die Aufgabe zugrunde, die Benutzungsattraktivität einer Digitalkamera zu erhöhen.

Diese Aufgabe wird erfindungsgemäß durch die im Patentanspruch 1 angegebenen Merkmale gelöst.

Im folgenden wird die Erfindung anhand eines in der Zeichnung dargestellten Ausführungsbeispieles beschrieben.

Die Erfindung setzt eine Digitalkamera zur Generierung von Daten, insbesondere Bilddaten und/oder Audiodaten, voraus. Zur Speicherung der Bilddaten ist in der Digitalkamera eine Speicherkarte vorgesehen. Die Speicherkarte kann beispielsweise in einen Aufnahmeschlitz an der Digitalkamera gesteckt werden. Die Digitalkamera kann ein Mikrofon aufweisen, und die vom Mikrofon aufgenommenen Audiodaten werden ebenfalls in den Datenspeicher abgelegt.

Die Bilddaten und bedarfsweise die Audiodaten können ganz oder teilweise auch in der austauschbaren Speicherkarte abgelegt werden. Es ist denkbar, den gesamten Speicherplatz des Datenspeichers der Digitalkamera durch die Speicherkarte zu realisieren.

Bei der Digitalkamera können graphische Zeichen, insbesondere Texte, eingegeben werden. Diese Zeichen sollen beispielsweise einem Bild beziehungsweise den zugehörigen Bilddaten zugeordnet werden. Auf diese Weise kann ein Bild mit einem Text beschriftet oder allgemein mit graphischen Zeichen versehen werden

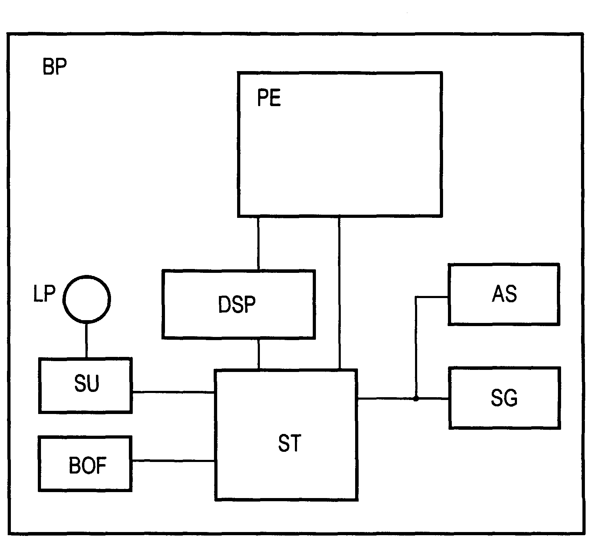

In Figur 1 ist ein erfindungsgemäßer Bildprojektor BP dargestellt, der zur Wiedergabe beziehungsweise Darstellung von Bildern, beispielsweise auf einer nicht näher dargestellten Projektionsfläche, eine Projektionseinrichtung PE aufweist. Diese Projektionseinrichtung PE kann in an sich bekannter Weise durch drei Projektionslampen für die drei Grundfarben Rot, Gelb und Blau realisiert sein. Die Ausgestaltung der Projektionseinrichtung PE ist für die Erfindung von untergeordneter Bedeutung und daher in der Zeichnung nicht detailliert dargestellt.

Zum Einlesen der Daten von einer Digitalkamera ist eine Aufnahmeschnittstelle AS vorgesehen. In die Aufnahmeschnittstelle AS kann die Speicherkarte der Digitalkamera gesteckt werden, und somit können deren Daten ausgelesen werden. Bei einer Variante der Erfindung kann die Aufnahmeschnittstelle AS durch eine serielle Schnittstelle realisiert sein, an der über ein Kabel oder eine drahtlose Verbindung die Verbindung zum Bildspeicher in der Digitalkamera hergestellt wird.

Die Aufnahmeschnittstelle AS ist mit einer Steuerung ST verbunden, an der ein Datenspeicher DSP angeschaltet ist. Über die Steuerung ST werden die von der Aufnahmeschnittstelle AS eingelesenen Daten in den Datenspeicher DSP des Bildprojektors PB geschrieben. Bei einer Ausgestaltung der Erfindung kann der Datenspeicher DSP durch eine Vielzahl von Speicherkarten, beispielsweise bis zu 30 Stück Smart-Media-Karten beziehungsweise MultiMediaCards, realisiert sein.

Zur Ausgabe der Daten kann bei einer Weiterbildung der Erfindung eine Ausgabeschnittstelle SG vorgesehen sein, die mit der Steuerung ST verbunden ist. Die Ausgabeschnittstellen SG dient beispielsweise zur Anbindung eines Personalcomputers, eines Fernsehgerätes, oder eines Druckers.

Zur Bedienung des Bildprojektors BP ist eine Bedienoberfläche BOF vorgesehen, die ein Anzeigedisplay und Bedientasten enthalten kann. Die Bedienoberfläche BOF ist an der Steuerung ST angeschaltet und dient unter anderem zur Auswahl der darzustellenden Bilder aus dem Datenspeicher DSP.

Die Steuerung ST ist mit dem Datenspeichers DSP und mit der Projektionseinrichtung PE verbunden, die wiederum auch an dem Datenspeichers DSP angeschaltet ist. Die Steuerung ST dient zur Steuerung des Datenflußes zwischen der angeschlossenen Aufnahmeschnittstelle AS und der Projektionseinrichtung PE. Hierdurch können die Bilder beziehungsweise die Bilddaten selektiert werden, die zur Darstellung über die Projektionseinrichtung PE vorgesehen sind. Zusätzlich kann festgelegt werden, ob die zu den Bildern gehörenden Audio- und gegebenenfalls graphischen Daten mit dargestellt werden sollen.

An der Steuerung ST ist über eine Signalumformeinrichtung SU mit einem Digital-Analogwandler ein Lautsprecher LP angeschlossen. Über den Lautsprecher LP können die Audiodaten wiedergegeben werden. Die Audiodaten werden dabei schnittgenau zu den Bilddaten wiedergegeben.

## Patentansprüche

1. Bildprojektor (BP) mit einer Projektionseinrichtung (PE) zur Wiedergabe von Daten, insbesondere Bilddaten, die mit einer Digitalkamera generiert worden sind,
mit einer Aufnahmeschnittstelle (AS) zur Aufnahme der Daten aus einem Speicherbaustein der Digitalkamera in einen internen Datenspeicher (DSP), und
mit Mitteln (ST, BOF) zur Auswahl der Daten und Weiterleitung an die Projektionseinrichtung (PE).

2. Bildprojektor (BP) nach Anspruch 1,
bei dem die Aufnahmeschnittstelle (AS) zur mechanischen Ankopplung des Speicherbausteins ausgebildet ist.

3. Bildprojektor (BP) nach Anspruch 1 oder 2,
bei dem die Daten Bilddaten und gegebenenfalls zugehörige Audiodaten und/oder graphische Daten enthalten.
